# EUROPÄISCHE PATENTSCHRIFT

(11) **EP 0 479 081 B1**
(45) Veröffentlichungstag und Bekanntmachung des Hinweises auf die Patenterteilung: **22.06.1994**
(21) Anmeldenummer: 91116110.7
(22) Anmeldetag: 23.09.1991
(51) Int. Cl.: B60R 17/00, F16H 57/04, F16N 7/40

(54) **Druckversorgungssystem für ein Fahrzeuggetriebe**
Pressure supply system for a vehicle transmission
Système d'alimentation au pression pour une transmission de véhicule

(30) Priorität: 25.09.1990 US 587379
(43) Veröffentlichungstag der Anmeldung: 08.04.1992
(73) Patentinhaber: DEERE & COMPANY, Moline, Illinois 61265 (US)
(72) Erfinder: Schäfer, Helmut, Dipl.-Ing., W-6834 Ketsch (DE); Hückler, Volker, Dipl.-Ing., W-7761 Radolfzell (DE); Marquart, Gordon LeRoy, Jesup, Iowa 50648 (US); Nordquist, Douglas Wayne, Cedar Falls, Iowa 50613 (US)
(74) Vertreter: Feldmann, Bernhard

(56) Entgegenhaltungen:
- DE-A- 1 919 040
- DE-C- 363 861
- DE-C- 731 447
- FR-A- 1 297 318
- US-A- 1 432 451
- US-A- 1 459 815
- US-A- 4 091 905

## Beschreibung

Die Erfindung betrifft ein Druckversorgungssystem gemäß den Merkmalen des Oberbegriffs des Patentanspruchs 1.

Ein übliches Getriebe hat in seinem tiefstliegenden Bereich eine Schmiermittelsammelkammer oder einen Sumpf, in dem sich das Schmieröl und in manchen Fällen auch das Steueröl sammelt. Das Öl wird aus der Schmiermittelsammelkammer mittels einer Hydraulikpumpe abgesaugt, um Drucköl an die Schmier- und Steuersysteme zu liefern.

Eine derartige Ausbildung hat den Nachteil, daß beim Betrieb unter extremen Steigungen es möglich ist, daß der Öleinlaß im Ölvorratsbehälter nicht mehr von Öl bedeckt ist und Luft anstelle des Öls angesaugt wird. In diesem Fall wird kein Steuer- und Schmieröl zu dem Getriebe und anderen Hydraulikeinrichtungen des Fahrzeuges gefördert, so daß diese nicht betriebsbereit sind. Beim Ausfall des Getriebes fällt die Verbindung zwischen der Antriebsmaschine und den Fahrzeugrädern aus. Es kann eine gefährliche Situation eintreten, wenn die Bremsen des Fahrzeuges nicht auf die in diesen Betriebszuständen anfallenden extrem hohen Anforderungen ausgelegt sind, oder wenn die Bedienungsperson nicht schnell genug auf die gefährliche Situation reagiert, die durch den Verlust der Motorbremsung hervorgerufen wird.

Es ist bekannt (US-A-4,531,421), die Zentrifugalkraft, die durch eine Kupplungstrommel erzeugt wird, auszunutzen, um Öl aus dem Kupplungsgehäuse auszutreiben. Ein weitgehend ölfreies Kupplungsgehäuse ist vorteilhaft, da hierdurch der Drehmomentwiderstand der Kupplungskomponenten, die andernfalls durch das Öl im Bodenbereich des Kupplungsgehäuses rotieren würden, klein gehalten werden kann. Ferner kann die Ausbildung eines Ölfilms zwischen den äußeren und inneren Kupplungsscheiben verhindert werden.

Die Kupplungstrommel enthält auf ihrem Umfang Leitflächen, und das Innere des Kupplungsgehäuses ist als Pumpengehäusekammer ausgebildet, um den Wirkungsgrad der Pumpwirkung zu vergrößern. Das Öl wird einfach aus dem Kupplungsgehäuse in die benachbarte Getriebekammer gepumpt, wo es sich mit dem übrigen Öl sammelt.

Aus der US-A-1,878,379 ist ein Schmiersystem für die Antriebsaggregate eines Fahrzeuges bekannt, bei dem im hinteren Bereich des Getriebegehäuses ein Überlauf vorgesehen ist, durch den Öl aus dem Getriebegehäuse abfließen kann und in das Kupplungsgehäuse geleitet wird. Die Kupplungstrommel schleudert das Öl nach oben in eine Wanne, von wo es einerseits in das Motorgehäuse und andererseits in das Getriebegehäuse abläuft. Hierdurch soll ein einfacher, wirkungsvoller Schmiermittelkreislauf gebildet werden. Ferner ist bei der bekannten Anordnung eine Ölpumpe vorgesehen, die Öl aus dem Motorgehäuse abpumpt und einem Schmiermittelverteilerkanal zuführt. Auf Probleme, die beim Überwinden geneigter Fahrtstrecken für die Druckversorgung auftreten können, wird nicht eingegangen.

Um bei Fahrten über unebenes Gelände zu vermeiden, daß der Hydraulikflüssigkeitsstand in dem Vorratsbehälter, aus dem eine Pumpe Hydraulikflüssigkeit ansaugt, unzulässig absinkt, schlägt die gattungsbildende US-A-4,091,905 vor, die kinetische Zentrifugalenergie einer sich drehenden Kupplung derart zu nutzen, daß die sich in einem Sumpf sammelnde Flüssigkeit über eine Leitung in den Vorratsbehälter gedrückt wird. Das Kupplungsgehäuse ist mit dem Getriebegehäuse derart verbunden, daß ein gemeinsamer Sumpf ausgebildet wird. Die Kupplung ist derart angeordnet, daß sich ihre drehenden Teile bei horizontal ausgerichtetem Fahrzeug oberhalb des Flüssigkeitsspiegels im Sumpf befinden und Panschverluste vermieden werden können. Bei Schrägfahrt neigt sich der Flüssigkeitsspiegel, die Kupplung taucht in die Flüssigkeit ein und treibt diese in den Vorratsbehälter. Wegen der Gefahr von Panschverlusten erscheint diese Lösung jedoch nur für relativ hoch bauende Getriebe, bei denen die Kupplung sich oberhalb des Flüssigkeitsspiegels anordnen läßt, sowie für Fahrtstrecken mit relativ geringem Neigungswinkel zweckmäßig zu sein, nicht jedoch für flach bauende Getriebe und große Steigungen, auf die beispielsweise landwirtschaftliche Fahrzeuge ausgelegt werden.

Die der Erfindung zugrunde liegende Aufgabe wird darin gesehen, ein Druckversorgungssystem gemäß dem Oberbegriff des Patentanspruchs 1 anzugeben, durch welches verhindert wird, daß der Einlaß der Hydraulikpumpe während des Betriebs des Fahrzeugs trocken fällt und nicht mehr von Öl bedeckt ist. Das Druckversorgungssystem soll sich für flach bauende Getriebe eignen. Panschverluste sollen weitgehend vermeidbar sein.

Die Aufgabe wird ausgehend von dem Oberbegriff des Patentanspruches 1 durch dessen kennzeichnende Merkmale gelöst. Demgemäß ist zwischen Getriebegehäuse und Kupplungsgehäuse ein Überlauf vorgesehen. Der Bodenbereich des Getriebegehäuses ist durch eine Gehäusestufe in wenigstens zwei Abschnitte unterschiedlicher Bodenhöhe unterteilt. Die Ansaugöffnung liegt in einem als Sammelbehälter ausgebildeten Getriebeabschnitt, dessen Bodenhöhe abgesenkt ist. In diesem Sammelbehälter endet eine Rücklaufleitung, deren Eintrittsende an die Zentrifugalpumpe angeschlossen ist.

Insbesondere bei Bergabfahrt kann die als Schmiermittel verwendete Hydraulikflüssigkeit nicht durch das vorhandene natürliche Gefälle zum Ansaugsystem der Hydraulikpumpe zurückgelangen. Die erfindungsgemäße Lösung ermöglicht jedoch, daß in diesem Fall die als Zentrifugalpumpe ausgebildete Kupplungstrommel die Hydraulikflüssigkeit in die Schmiermittelsammelkammer zurückpumpt.

Es hat sich herausgestellt, daß die Wandreibung zwischen dem Außendurchmesser der Kupplungstrommel und dem als Hydraulikflüssigkeit verwendeten Öl in der Regel ausreicht, um den erforderlichen Pumpeffekt zu erzielen. Das mit Umfangsgeschwindigkeit der Kupplungstrommel rotierende Öl wird radial in einen am Umfang des Kupplungsgehäuses angebrachten Auslaßkanal abgeschleudert. Der Leistungsbedarf für die Förderleistung ist bei der hier beschriebenen Anordnung günstig, weil im Normalfall neben den inneren Leckagen der Kupplung nur das der Kupplung zugeführte Kühlöl aus dem Kupplungsgehäuse gefördert werden muß. Dieses Kühlöl wird der Kupplung nur zeitweise zugeführt und tritt radial aus der Kupplungstrommel aus. Es braucht somit nicht mehr zusätzlich auf die Umfangsgeschwindigkeit der Kupplung beschleunigt zu werden. Höherer Leistungsbedarf für höhere Fördermengen tritt nur bei steiler Bergabfahrt auf. In diesem Fahrzustand ist die Verlustleistung des Getriebes jedoch von untergeordneter Bedeutung. Außerdem spielt dieser Fahrzustand durch die geringen Zeitanteile in der Bilanz der gesamten Getriebeverlustleistung keine Rolle.

Vorzugsweise ist die Gehäusestufe derart ausgebildet, daß sie einen hohen Hydraulikflüssigkeitsstand über der Ansaugöffnung bei in Bergabfahrt ausgerichtetem Fahrzeug ermöglicht. Dabei soll jedoch die gesamte im Getriebegehäuse befindliche Hydraulikflüssigkeit, also auch die in dem nicht als Sammelbehälter ausgebildeten Getriebeabschnitt befindliche Hydraulikflüssigkeit, bei Bergabfahrt so lange wie möglich zur Ansaugöffnung durch natürliches Gefälle fließen können.

Zusätzlich zu dieser Maßnahme wird gemäß einer Weiterbildung der Erfindung vorgeschlagen, daß der Überlauf so angeordnet und bemessen ist, daß nur bei in Bergabfahrt ausgerichtetem Fahrzeug und bei größeren Neigungswinkeln Hydraulikflüssigkeit vom Getriebegehäuse ins Kupplungsgehäuse übertritt.

Ferner ist es von Vorteil, den Überlauf so zu bemessen, daß die Durchflußmenge bei sehr großen Neigungswinkeln nicht höher ist, als die Fördermenge der Zentrifugalpumpe. Die als Zentrifugalpumpe ausgebildete Kupplungstrommel fördert damit jederzeit mehr Hydraulikflüssigkeit als in das Kupplungsgehäuse nachfließt. So wird verhindert, daß sich das Kupplungsgehäuse mit Hydraulikflüssigkeit anfüllt. Hierdurch wird verhindert, daß die unter dem Getriebeölspiegel rotierenden Kupplungsteile Panschverluste erzeugen. Ferner wird die Ausbildung von Ölfilmen zwischen Außen- und Innenlamellen verhindert, die bei getrennter (geöffneter) Kupplung ein Schleppmoment erzeugen würden, wodurch die Getriebeschaltbarkeit ungünstig beeinflußt werden würde.

Gemäß einer bevorzugten Weiterbildung der Erfindung ist bei in Bergabfahrt ausgerichtetem Fahrzeug der Neigungswinkel, bei dem der Überlauf öffnet, kleiner als der Neigungswinkel, bei dem der Rücklauf über die Gehäusestufe abgeschnitten wird. Es wird hierdurch erreicht, daß in den Sammelbehälter erst bei einer Neigung kein Öl aus dem übrigen Getriebegehäuse mehr zufließt, wenn Öl in das Kupplungsgehäuse übertritt und von der Kupplung in den Sammelbehälter zurück gepumpt wird.

Die Förderleistung, mit der die als Zentrifugalpumpe ausgebildete Kupplungstrommel Hydraulikflüssigkeit aus dem Kupplungsgehäuse in das Getriebegehäuse pumpt, ist vorzugsweise so bemessen, daß sie selbst im unteren Leerlauf des die Kupplung antreibenden Antriebsmotors mindestens die Förderleistung der Hydraulikpumpe erreicht. Damit wird sichergestellt, daß unter keinen Betriebsbedingungen mehr Hydraulikflüssigkeit aus dem Abschnitt des Getriebegehäuses, in dem die Ansaugöffnung liegt, für die Versorgung der Hydraulikkomponenten und die Schmierung entnommen wird, als zugeführt wird. Die Schmiermittelsammelkammer kann damit nicht trocken fallen.

Es hat sich als vorteilhaft erwiesen und wird gemäß einer weiteren Ausgestaltung der Erfindung vorgeschlagen, daß der Sammelbehälter mit seiner Bodenwandung, mit zum Überlauf gerichteten Seitenwandungen und mit einer in etwa parallel zur Bodenwandung verlaufenden, sich an die Seitenwandungen anschließenden und mit einer Überlaufkante versehenen Abdeckwandung topfförmig ausgebildet ist. Im unteren Bereich dieser topfförmigen Ausbildung befindet sich die Ansaugöffnung. Die Überlaufkante bildet hierbei die genannte Gehäusestufe. Vorzugsweise endet die Rücklaufleitung im Bereich des durch die Wandungen begrenzten topfförmigen Sammelbehälters.

Die erfindungsgemäße Lösung findet besonders dort Anwendung, wo hinsichtlich der Fahrtrichtung des Fahrzeuges das Kupplungsgehäuse vor dem Getriebegehäuse angeordnet ist und der Sammelbehälter sich im hinteren Abschnitt des Getriebegehäuses befindet.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung eines Getriebes, welches ein erfindungsgemäßes Druckversorgungssystem enthält, und
- Fig. 2 bis 6: schematische Darstellungen, die denen der Fig. 1 entsprechen und denen zufolge das Getriebe unter verschiedenen Winkeln nach vorn oder hinten geneigt ist.

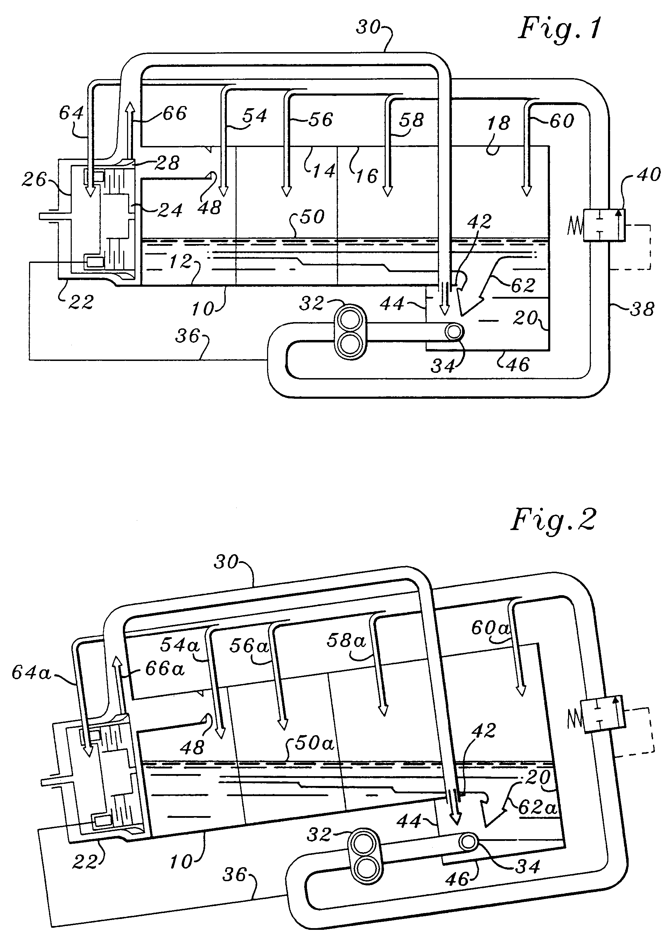

Aus Fig. 1 geht ein Fahrzeuggetriebe hervor, das insbesondere für landwirtschaftliche oder Nutzfahrzeuge geeignet ist. Das Getriebegehäuse 10 enthält mehrere Getriebekammern 12, 14, 16, 18, die gemeinsam eine Hauptgetriebekammer bilden. An der tiefsten Stelle des Getriebegehäuses 10 befindet sich im Bodenbereich der Getriebekammer 18 ein als Saugkammer 20 ausgebildeter Sammelbehälter. An der hinsichtlich der Fahrtrichtung des Fahrzeuges vorderen Seite des Getriebes ist ein Kupplungsgehäuse 22 befestigt, welches die Fahrzeugkupplung 24 aufnimmt. Die Kupplungstrommel 26 der Fahrzeugkupplung 24 ist mit einer nicht gezeigten Antriebsmaschine, beispielsweise einem Verbrennungsmotor verbunden. Die Umfangsfläche der Kupplungstrommel 26 ist vorzugsweise mit einer Reihe von Förderschaufeln 28 versehen. Die Innenwandung des Kupplungsgehäuses 22 ist als Pumpenradgehäuse ausgebildet, so daß das Kupplungsgehäuse 22 mit den Förderschaufeln 28 als Pumpe wirkt, um Öl aus dem Kupplungsgehäuse 22 in eine Rückführleitung 30, deren anderes Ende in der Saugkammer 20 mündet, zu fördern. Eine Hydraulikpumpe 32, die im vorliegenden Fall schematisch als Zahnradpumpe dargestellt ist, saugt durch einen Einlaß 34 Öl aus der Saugkammer 20 an. Der Einlaß 34 befindet sich vorzugsweise an dem vorderen, der Kupplung 24 zugewandten Ende der Saugkammer 20 in deren Bodenbereich.

Die Hydraulikpumpe 32 dient als Druckölversorgungspumpe für die Versorgung verschiedener Fahrzeugkomponenten, beispielsweise der Kupplung 24, der Lenkung, der Bremsen, einer Differentialsperre und dergleichen. Stellvertretend wurde in der Zeichnung lediglich eine einzelne Steuerleitung 36 dargestellt, durch die die Druckseite der Hydraulikpumpe 32 mit dem Steuerkolben der Kupplung 24 verbunden ist. Diese Steuerleitung 36 enthält die üblichen Steuerventile und dergleichen, die jedoch nicht dargestellt wurden. Die Druckseite der Hydraulikpumpe 32 liefert ferner Schmieröl an das Schmierölsystem des Getriebes, was durch eine Schmiermittelleitung 38 und ein Druckregulierventil 40 angedeutet ist.

Oberhalb der Saugkammer 20 befindet sich auf deren der Kupplung zugewandten Seite eine Überlaufkante 42. Die Überlaufkante 42 bildet mit den Wandungen 44, 46 einen topfförmigen Bereich, durch den Öl in der Saugkammer 20 zurückgehalten wird, wenn das Getriebe unter einem extremen Neigungswinkel betrieben wird. Die Lage der Überlaufkante 42 wird durch den maximalen Betriebswinkel, unter dem das Getriebe einsetzbar sein soll, bestimmt. Die Überlaufkante 42 kann beispielsweise hinsichtlich der Längsrichtung des Getriebes einen gleich großen Abstand zur Kupplung 24 aufweisen, wie die am weitesten von der Kupplung 24 entfernt liegende Seite des Einlasses 34.

Zwischen dem Getriebegehäuse 10 und dem Kupplungsgehäuse 22 ist ein Überlauf 48 vorgesehen. Der Durchlaß des Überlaufes 48 ist vorzugsweise an einer solchen Stelle angeordnet, daß Öl nur dann aus dem Getriebegehäuse 10 in das Kupplungsgehäuse 22 fließt, wenn das Getriebe unter einem extremen Winkel betrieben wird, wie es noch beschrieben werden wird.

Die Wirkungsweise des erfindungsgemäßen Druckversorgungssystems ist folgende:

Das Getriebegehäuse 10 ist gemäß Fig. 1 bis zur Ölspiegellinie 50 mit Öl gefüllt. Von der Hydraulikpumpe 32 wird Öl durch den Einlaß 34 aus der Saugkammer 20 angesaugt. Ein kleinerer Teil diese Öls dient der Versorgung verschiedener Fahrzeugkomponenten, was durch die Steuerleitung 36 angedeutet wurde. Der größere Teil dieses Öls wird jedoch über die Schmiermittelleitung 38 den Getriebekammern 12, 14, 16, 18 zugeführt, wie es die Pfeile 54, 56, 58, 60 zeigen. Letztgenannter Schmierölanteil kehrt unter der Gravitationswirkung in die Saugkammer 20 zurück, wie es der Pfeil 62 veranschaulicht. Ein kleinerer Teil des durch die Schmiermittelleitung 38 fließenden Öls wird zu Kühl- und Schmierzwecken der Kupplung 24 zugeführt, wie es der Pfeil 64 zeigt. Dieses Öl wird über die Rückführleitung 30 zu der Saugkammer 20 infolge der aktiven Pumpfunktion der Kupplung 24, die durch den Pfeil 66 hervorgehoben wurde, zurückgeführt.

In den Figuren 2 bis 6 ist das in Fig. 1 horizontal ausgerichtete Getriebe unter verschiedenen Neigungswinkeln dargestellt. In diesen Figuren wurden für gleiche Teile die selben Bezugsziffern verwendet. Die Bezugszeichen für die Ölspiegellinien und die Strömungspfeile wurden beibehalten, jedoch durch Buchstaben ergänzt. Beispielsweise wurde der Ölfluß, der in Fig. 1 durch den Pfeil 56 gekennzeichnet ist, in Fig. 2, Fig. 3, Fig. 4 usw. mit den Bezugsbezeichnungen 56a, 56b, 56c usw. belegt.

Wie aus Fig. 1 ersichtlich, liegt der Überlauf 48 im Getriebe ausreichend hoch, so daß gewöhnlich kein Öl durch den Durchlaß des Überlaufes 48 von dem Getriebegehäuse 10 in das Kupplungsgehäuse 22 fließen kann. Vorzugsweise ist der Überlauf 48 so hoch angeordnet, daß selbst bei einer leichten Neigung des Getriebes kein Öl übertreten kann, wie es aus Fig. 2 hervorgeht. Der einzige bedeutsame Unterschied zwischen den Figuren 1 und 2 besteht darin, daß der durch die Gravitationskraft hervorgerufene zurück in die Saugkammer 20 gerichtete Ölfluß 62a etwas träger ist, da der Ölspiegel 50a nicht so hoch über der Saugkammer 20 steht.

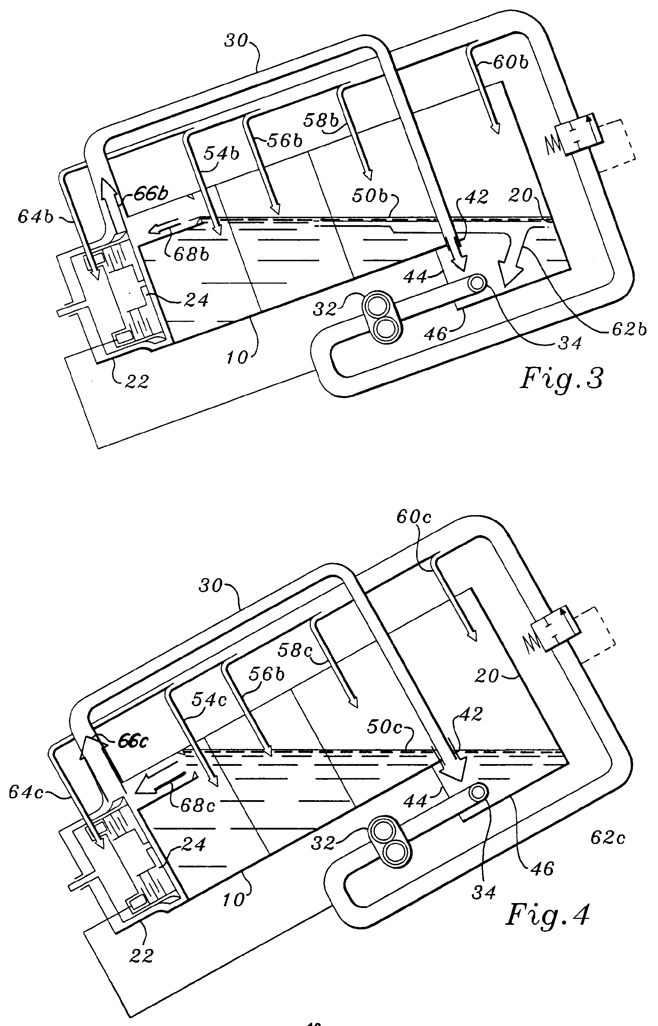

Bei weiter steigendem Neigungswinkel des Getriebes erreicht die Ölspiegellinie 50b schließlich den Überlauf 48 (Fig. 3), so daß etwas Öl aus dem Getriebegehäuse 10 in das Kupplungsgehäuse 22 überzufließen beginnt, was der Pfeil 68b veranschaulicht. Dieses Öl wird durch die Pumpfunktion der Kupplung 24 in die Saugkammer 20 zurückgefördert, wie es durch den nun breiteren Pfeil 66b angedeutet ist. Der auf der Gravitationskraft beruhende Rückfluß 62b an Öl ist noch träger als in Fig. 2, was durch den schmaleren Pfeil 62b angedeutet ist.

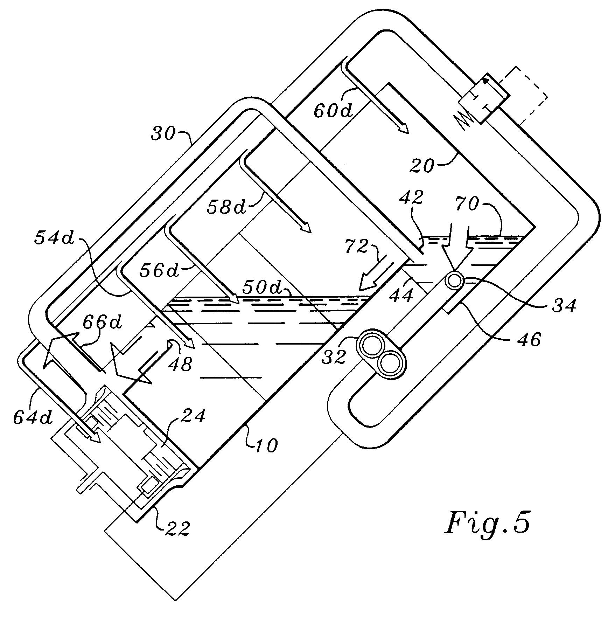

Wie aus Fig. 4 hervorgeht, befindet sich bei einer weiteren Neigung der gesamte Durchlaß des Überlaufes 48 unterhalb der Ölspiegellinie 50c, so daß gemäß dem Pfeil 68c Öl rasch von dem Getriebegehäuse 10 in das Kupplungsgehäuse 22 fließt. Dieses Öl wird dann durch die Pumpfunktion der Kupplung 24 entsprechend dem Pfeil 66c zurück in die Saugkammer 20 gepumpt.

Bei einem Neigungswinkel gemäß Fig. 4 hat die Ölspiegellinie 50c einen Punkt erreicht, bei dem kein gravitationsbedingter Ölfluß mehr von dem Getriebegehäuse 10 in die Saugkammer 20 erfolgt. Ohne die Rückpumpfunktion der Kupplung 24 würde dies zur Folge haben, daß die Hydraulikpumpe 32 das restliche Öl aus der Saugkammer 20 rasch abpumpt, was zu einem vollständigen Versagen der Hydraulikversorgung der verschiedenen Fahrzeugkomponenten sowie des Schmiersystems führen würde. Durch die Rückpumpfunktion der Kupplung 24 wird jedoch die Saugkammer 20 ständig wieder aufgefüllt, so daß sie nicht leer wird.

In extremen Fällen, bei denen der Neigungswinkel beispielsweise 45° beträgt (Fig. 5), liegt die Ölspiegellinie 50d deutlich unterhalb der Gehäusestufe 42. In dieser Lage wirken die Überlaufkante 42 und die Seitenwandungen 44, 46 wie ein Topf, durch den ein zusätzliches Ölangebot bei einer Ölspiegellinie 70 oberhalb des Einlasses 34 aufrechterhalten wird. Die Pumpleistungen der Kupplung 24 und der Hydraulikpumpe 32 sind so aufeinander abgestimmt, daß die Kupplung selbst bei der kleinsten zulässigen Drehzahl (geringste Drosseleinstellung) der Antriebsmaschine so viel Öl liefert, daß das zusätzliche Ölangebot jederzeit aufrechterhalten wird. Im vorliegenden Fall hat die Kupplung 24 daher eine höhere Förderleistung als die Hydraulikpumpe 32. Ein durch die Kupplung geförderter Überschuß an Öl läuft über die Überlaufkante 42 über, wie es der Pfeil 72 veranschaulicht.

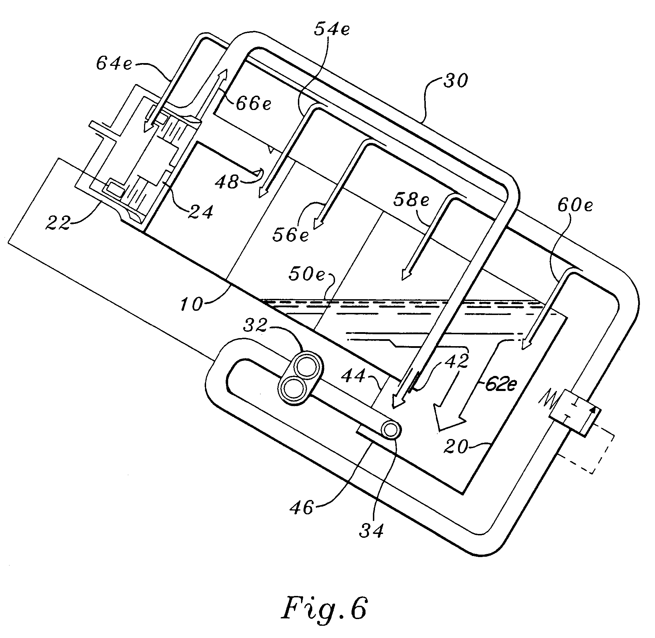

Gemäß Fig. 6 ist das Getriebe in die entgegengesetzte Richtung geneigt. Es ist ersichtlich, daß in dieser Lage die der vorliegenden Erfindung zugrunde liegenden Probleme nicht auftreten, da infolge der Gravitationskraft genügend Öl in die Saugkammer 20 fließt. Bei Bergabfahrt ist der zusätzliche Widerstand, den die Pumpwirkung in der Kupplung 24 hervorruft, nicht besonders nachteilig, da in dieser Lage lediglich eine geringe Antriebskraft dem Getriebe abverlangt wird. Während der Bergauffahrt wird hingegen eine hohe Antriebskraft gefordert, so daß es wünschenswert ist, den Widerstand der Kupplung 24 klein zu halten. Dies ist bei der Lage gemäß Fig. 6 der Fall, da sich bei dieser Lage im Kupplungsgehäuse 22 wenig Öl befindet, das zurück gepumpt werden muß. Die Kupplung befindet sich in Hauptfahrtrichtung vorzugsweise vorn, da hierbei die Verlustbilanz durch Panschverluste günstig ist. Ferner sollte die Kupplung von der Ansaugstelle aus gesehen möglichst am weitest entferntesten Ende des Getriebes angeordnet sein.

Auch wenn die Erfindung lediglich an Hand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen. So wurde hier die Erfindung anhand einer Saugkammer, die sich an einem Ende des Getriebes befindet, einem aus mehreren Getriebekammern bestehenden Getriebegehäuse und dergleichen beschrieben. Die Saugkammer oder ein Sammelbehälter können sich jedoch an einer beliebigen Stelle entlang des Getriebegehäuses befinden. Ferner können mehr oder weniger Getriebekammern vorliegen.

## Patentansprüche

1. Druckversorgungssystem für hydraulisch betätigbare Komponenten und die Getriebeschmierung eines Fahrzeuges mit einem Getriebegehäuse (10), einer Hydraulikpumpe (32) und einer Kupplung (24), bei dem sich Hydraulikflüssigkeit im Bodenbereich des Getriebegehäuses (10) sammelt und von hier über eine Ansaugöffnung (34) von einer Hydraulikpumpe (32) angesaugt und den Komponenten sowie dem Schmiersystem zugeführt wird und bei dem eine Kupplungstrommel (26) der Kupplung (24) als Rotor einer Zentrifugalpumpe ausgebildet ist und Hydraulikflüssigkeit aus dem Kupplungsgehäuse (22) in das Getriebegehäuse (10) fördert, wobei der Bodenbereich des Getriebegehäuses (10) in wenigstens zwei Getriebeabschnitte unterschiedlicher Bodenhöhe unterteilt ist, und der zum Kupplungsgehäuse (22) weiter entfernt liegende Getriebegehäuseabschnitt eine einen Sammelbehälter (20) bildende abgesenkte Bodenhöhe aufweist und wobei in dem Sammelbehälter (20) die Ansaugöffnung (34) liegt und eine Rücklaufleitung (30) endet, deren Eintrittsende an die Zentrifugalpumpe angeschlossen ist, dadurch gekennzeichnet, daß die unterschiedlichen Bodenhöhen durch eine Getriebegehäu- sestufe (42) gebildet werden und daß zwischen Getriebegehäuse (10) und Kupplungsgehäuse (22) ein Überlauf (48) vorgesehen ist, über den Hydraulikflüssigkeit vom Getriebegehäuse (10) in das Kupplungsgehäuse (22) übertritt, sofern der Fahrzeugneigungswinkel einen bestimmten Betrag übersteigt.

2. Druckversorgungssystem nach Anspruch 1, dadurch gekennzeichnet, daß die Getriebegehäusestufe (42) derart ausgebildet ist, daß sie bei in Bergabfahrt ausgerichtetem Fahrzeug oberhalb der Ansaugöffnung (34) liegt.

3. Druckversorgungssystem nach Anspruch 1 oder 2, dadurch gekennzeichnet, daß der Überlauf (48) so angeordnet und bemessen ist, daß nur bei in Bergabfahrt ausgerichtetem Fahrzeug und bei größeren Neigungswinkeln Hydraulikflüssigkeit vom Getriebegehäuse (10) ins Kupplungsgehäuse (22) übertritt.

4. Druckversorgungssystem nach Anspruch 3, dadurch gekennzeichnet, daß der Überlauf (48) so bemessen ist, daß die Durchflußmenge bei sehr großen Neigungswinkeln nicht höher ist als die Fördermenge der Zentrifugalpumpe.

5. Druckversorgungssystem nach Anspruch 3 oder 4, dadurch gekennzeichnet, daß bei in Bergabfahrt ausgerichtetem Fahrzeug der Neigungswinkel, bei dem der Überlauf (48) öffnet, kleiner ist als der Neigungswinkel, bei dem der Rücklauf über die Gehäusestufe (42) abgeschnitten wird.

6. Druckversorgungssystem nach einem der Ansprüche 1 bis 5, dadurch gekennzeichnet, daß die als Zentrifugalpumpe dienende Kupplung (24) die Fahrkupplung des Fahrzeuges ist.

7. Druckversorgungssystem nach einem der Ansprüche 1 bis 6, dadurch gekennzeichnet, daß die Förderleistung der Zentrifugalpumpe unter allen Betriebsbedingungen höher ist als die Förderleistung der Hydraulikpumpe (32).

8. Druckversorgungssystem nach einem der Ansprüche 1 bis 7, dadurch gekennzeichnet, daß der Sammelbehälter (20) mit seiner Bodenwandung (46), mit zum Überlauf gerichteten Seitenwandungen (44) und mit einer in etwa parallel zur Bodenwandung (46) verlaufenden, sich an die Seitenwandungen (44) anschließenden und mit einer Überlaufkante (42) versehenen Abdeckwandung topfförmig ausgebildet ist, und daß sich im unteren Bereich der topfförmigen Ausbildung die Ansaugöffnung (34) befindet.

9. Druckversorgungssystem nach Anspruch 8, dadurch gekennzeichnet, daß die Rücklaufleitung im Bereich des durch die Wandungen (42, 44, 46) begrenzten topfförmigen sammelbehälterbereiches endet.

10. Druckversorgungssystem nach einem der Ansprüche 1 bis 9, dadurch gekennzeichnet, daß hinsichtlich der Fahrtrichtung des Fahrzeuges das Kupplungsgehäuse (22) vor dem Getriebegehäuse (10) angeordnet ist und daß sich der Sammelbehälter (20) im hinteren Abschnitt des Getriebegehäuses (10) befindet.

## Claims

1. A pressure supply system for hydraulically operated components and transmission lubrication of a vehicle with a transmission housing (10), a hydraulic pump (32) and a clutch (24), in which hydraulic fluid collects in the bottom region of the transmission housing (10) and is sucked from there through the suction opening (34) of a hydraulic pump (32) and is fed to the components and to the lubrication system, and in which a clutch drum (26) of the clutch (24) is formed as the rotor of a centrifugal pump and feeds hydraulic fluid from the clutch housing (22) into the transmission housing (10), wherein the bottom region of the transmission housing (10 is divided into a least two transmission sections with different bottom heights, and the transmission housing section lying farthest from the clutch housing (22) has a lower bottom height forming a reservoir (20) and wherein the suction opening (34) lies in the reservoir (20) and a return line (30) whose inlet end is connected to the centrifugal pump ends therein, characterized in that the different bottom heights are formed by a transmission housing step (42) and in that an overflow (48) is provided between the transmission housing (10) and the clutch housing (22), through which hydraulic fluid passes from the transmission housing (10) into the clutch housing (22) when the angle of inclination of the vehicle exceeds a predetermined value.

2. A pressure supply system according to claim 1, characterized in that the transmission housing step (42) is so formed that it lies above the suction opening (34) with the vehicle in an attitude for going downhill.

3. A pressure supply system according to claim 1 or 2, characterized in that the overflow (48) is of such disposition and size that hydraulic fluid only passes from the transmission housing (10) into the clutch housing (22) with the vehicle in an attitude for downhill and with larger angles of inclination.

4. A pressure supply system according to claim 3, characterized in that the overflow (48) is of such a size that the amount which flows through with very large angles of inclination is not greater than the feed amount of the centrifugal pump.

5. A pressure supply system according to claim 3 or 4, characterized in that, with the vehicle in an attitude for travel downhill, the angle of inclination at which the overflow (48) opens is smaller than the angle of inclination at which the return flow over the housing step (42) is cut off.

6. A pressure supply system according to any of claims 1 to 5, characterized in that the clutch (24) serving as a centrifugal pump is the drive clutch of the vehicle.

7. A pressure supply system according to any of claims 1 to 6, characterized in that the feed rate of the centrifugal pump is higher under all operating conditions than the feed rate of the hydraulic pump (32).

8. A pressure supply system according to any of claims 1 to 7, characterized in that the reservoir (20) is formed like a cup with its bottom wall (46), sidewalls (44) directed towards the overflow and a cover wall running approximately parallel to the bottom wall (46) and adjoining the sidewalls (44) and provided with an overflow edge (42), and in that the suction opening (34) is located in the lower region of the cup-like formation.

9. A pressure supply system according to claim 8, characterized in that the return line ends in the region of the cup-like reservoir region bounded by the walls (42, 44, 46).

10. A pressure supply system according to any of claims 1 to 9, characterized in that the clutch housing (22) is arranged in front of the transmission housing (10) in relation to the direction of travel of the vehicle and in that the reservoir (20) is located in the rear section of the transmission housing (10).

## Revendications

1. Système d'alimentation en pression pour des éléments à actionnement hydraulique et pour la lubrification de la transmission d'un véhicule, avec un carter de transmission (10), une pompe hydraulique (32) et un embrayage (24), selon lequel du liquide hydraulique s'accumule dans la région de fond du carter de transmission (10), d'où il est aspiré par la pompe hydraulique (32) par l'intermédiaire d'une ouverture d'aspiration (34) et amené auxdits éléments ainsi qu'au système de lubrification, et selon lequel un tambour d'embrayage (26) de l'embrayage (24) est conçu comme rotor d'une pompe centrifuge et refoule du liquide hydraulique du carter d'embrayage (22) dans le carter de transmission (10), la région de fond du carter de transmission (10) étant subdivisée en au moins deux parties de carter de hauteurs de fond différentes, la partie de carter de transmission la plus éloignée du carter d'embrayage (22) présentant une hauteur de fond abaissée qui constitue un récipient collecteur (20), l'ouverture d'aspiration (34) se trouvant dans le récipient collecteur (20) et une conduite de retour (30), dont l'extrémité d'entrée est raccordée à la pompe centrifuge, se terminant dans le récipient collecteur (20), **caractérisé** en ce que les différentes hauteurs de fond sont formées par un gradin de carter de transmission (42) et en ce qu'un trop-plein (48) est prévu entre le carter de transmission (10) et le carter d'embrayage (22), trop-plein par lequel du liquide hydraulique déborde du carter de transmission (10) dans le carter d'embrayage (22) dans la mesure où l'angle d'inclinaison du véhicule dépasse une valeur déterminée.

2. Système d'alimentation en pression selon la revendication 1, **caractérisé** en ce que le gradin de carter de transmission (42) est conçu de telle sorte qu'il se trouve au-dessus de l'ouverture d'aspiration (34) lorsque le véhicule est incliné en descente.

3. Système d'alimentation en pression selon la revendication 1 ou 2, **caractérisé** en ce que le trop-plein (48) est disposé et dimensionné de telle sorte que du liquide hydraulique déborde du carter de transmission (10) dans le carter d'embrayage (22) uniquement lorsque le véhicule est incliné en descente avec un angle d'inclinaison important.

4. Système d'alimentation en pression selon la revendication 3, **caractérisé** en ce que le trop-plein (48) est dimensionné de telle sorte qu'à des angles d'inclinaison très importants, le débit d'écoulement n'est pas supérieur au débit de refoulement de la pompe centrifuge.

5. Système d'alimentation en pression selon la revendication 3 ou 4, **caractérisé** en ce que, lorsque le véhicule est incliné en descente, l'angle d'inclinaison auquel s'ouvre le trop-plein (48) est inférieur à l'angle d'inclinaison auquel cesse le reflux de liquide déversé par le gradin de carter (42).

6. Système d'alimentation en pression selon l'une quelconque des revendications 1 à 5, **caractérisé** en ce que l'embrayage (24) servant de pompe centrifuge est l'embrayage de marche du véhicule.

7. Système d'alimentation en pression selon l'une quelconque des revendications 1 à 6, **caractérisé** en ce que la puissance de refoulement de la pompe centrifuge est supérieure, dans toutes les conditions de service, à la puissance de refoulement de la pompe hydraulique (32).

8. Système d'alimentation en pression selon l'une quelconque des revendications 1 à 7, **caractérisé** en ce que le récipient collecteur (20), est configuré en pot formé par sa paroi de fond (46), par des parois latérales (44) dressées en direction du déversement et par une paroi de recouvrement qui s'étend approximativement parallèlement à la paroi de fond (46), se raccorde aux parois latérales (44) et est pourvue d'un bord de déversement (42), et en ce que l'ouverture d'aspiration (34) se trouve dans la région inférieure de la configuration en pot.

9. Système d'alimentation en pression selon la revendication 8, **caractérisé** en ce que la conduite de retour se termine dans la région du récipient collecteur en forme de pot délimité par les parois (42, 44, 46).

10. Système d'alimentation en pression selon l'une quelconque des revendications 1 à 9, **caractérisé** en ce que le carter d'embrayage (22) est disposé devant le carter de transmission (10) dans la direction de marche du véhicule, et en ce que le récipient collecteur (20) se trouve dans la partie arrière du carter de transmission (10).
